# EUROPEAN PATENT SPECIFICATION

(11) **EP 0 514 160 B1**
(45) Date of publication and mention of the grant of the patent: **13.11.1996**
(21) Application number: 92304331.9
(22) Date of filing: 14.05.1992
(51) Int. Cl.: H04N 1/04, G05D 13/62

(54) **Programmable motor drive system for a polygon scanner**
Programmierbares Motorantriebssystem für Polygonabtaster
Système programmable de commande du moteur d'un dispositif de balayage à polygone

(30) Priority: 15.05.1991 US 700675
(43) Date of publication of application: 19.11.1992
(73) Proprietor: XEROX CORPORATION, Rochester New York 14644 (US)
(72) Inventor: Nacman, Aron, Rochester, New York 14620 (US)
(74) Representative: Phillips, Margaret Dawn

(56) References cited:
- EP-A- 0 371 800
- US-A- 4 140 903
- US-A- 4 143 311
- US-A- 4 605 884
- PATENT ABSTRACTS OF JAPAN vol. 8, no. 29 (E-226)7 February 1984 & JP-A-58 190 286

## Description

The present invention relates generally to a laser printing system using a rotating polygon to scan a modulated beam across a photosensitive surface, and, more particularly, to a programmable drive means for changing motor speeds in response to changes in image resolution requirements.

Electronic copiers or printers of the type which use a raster output scanner (ROS) to form images on a moving photosensitive medium are well known and commercially available. In a typical system, a gas or laser diode is pulsed and its output modulated in accordance with data information to be printed on a photosensitive medium. The modulated laser beam output is directed to a rotating optical scanner, conventionally a multi-faceted polygon element, driven by a motor, which scans the modulated beams across the medium, which can be, for example, a charged photoreceptor belt or drum. The modulated scanning beam exposes the belt or drum in an image-wise pattern which can subsequently be developed and a developed image is then transferred to an output sheet.

In the ROS scanning system, the motor drive for the scanning polygon is a critical component since output copy quality is directly proportional to the smoothness of motor operation. It has been found that for accurate speed control at relatively high speeds, an AC hysteresis synchronous motor for some systems is preferable to the DC drive motors which are conventionally used to drive scanning polygons at lower operational speeds. The AC motor can be driven by applying either sine wave signals, or square wave signals to the motor windings. US-A-4,349,847 is representative of a scanning system in which a hysteresis synchronous polygon motor is driven by sine wave inputs. The main disadvantages of the sine wave drive is that it must be enabled in combination with a tuned circuit. And, since the motor is an inductive load, it is necessary to use power factor correction capacitors across the load; necessary, because the drive transistors driving the motor are operating in the active region, and dissipate too much power with a purely inductive load. The power factor correction capacitors are chosen to have a value dependent on the frequency of the sine wave inputs. If the frequency changes by more than a small amount, the capacitor value must be changed to compensate, else the drive transistors will fail. Since these capacitors are relatively large, accommodating more than a small range of motor speeds becomes very difficult.

Use of square wave input signals to the motor does not require use of the power factor of correction capacitor, since the drive transistors are operated only in the cutoff and saturation regions, where power dissipation levels are low. The disadvantage of using the square wave drive is that the motor tends to jump out of sync at the wave front transitions, and the power must therefore be adjusted at each desired frequency change in order to maintain smooth motor operation. Thus, while square wave drives have been used in scanning systems to compensate for instantaneous speed variations known as "hunting" (see US-A-4,140,903) it has heretofore not been known to drive a polygon motor with square wave signals with various, relatively large, frequency input changes to obtain a desired speed change. The advantage of a square wave drive system with proper power adjustment is that the ROS can be operated so as to enable a continuously variable resolution of the scan beams at the photosensitive medium in a slow scan direction, (the direction of the photoreceptor motion) with good copy quality.

According to a first aspect of the present invention, a square wave polygon motor drive system is disclosed in an "open loop" circuit in which a crystal oscillator is used to provide two stable reference square waves. The frequency of the square waves is divided down and a 90° phase shift established. A divide by n counter provides the divided down frequency signals to provide the final square wave outputs 90° out of phase and at a power level determined by a programmable power supply. According to a second aspect of the invention, automatic power adjustment is provided by providing a look-up table that maps the desired motor RPM into a power level for an optimum motor performance.

Summarizing both aspects of the invention, the drive signals (phases 1 and 2) to the motor need to be changed in frequency and in amplitude to obtain desired motor performance.

More particularly, the present invention relates to an open loop motor speed control system for controlling the rotational speed of a polygon adapted to scan a reflected beam of radiation over the surface of a photosensitive medium in the fast scan direction, said system comprising:
an AC hysteresis synchronous motor coupled to said polygon and adapted to drive said polygon at said rotational speed, characterised by
means for varying the frequency of square wave signals applied to said motor in response to signals representing changes in polygon rotation speed and
means for adjusting the power level of said square wave signals in response to said square wave signal frequency variations whereby the frequency and amplitude of said square wave signals are varied to provide smooth motor speed transitions at the square wave transition points.

A motor speed control system in accordance with the invention will now be described, by way of example, with reference to the accompanying drawings, in which:-

Figure 1 illustrates a simplified representation of the optical and recording portions of a laser ROS printing system in which the polygon motor is driven by the drive circuit of the present invention.

Figure 2 is a block diagram of the drive system shown in Figure 1.

Figure 3 is a plot of motor speed versus percent RPM change for a one count change to the divide by n circuit.

Figure 4 shows the drive signal to the polygon motor at a first RPM and a second (2X) RPM.

Figure 5 is an alternative embodiment of the block diagram shown in Figure 2.

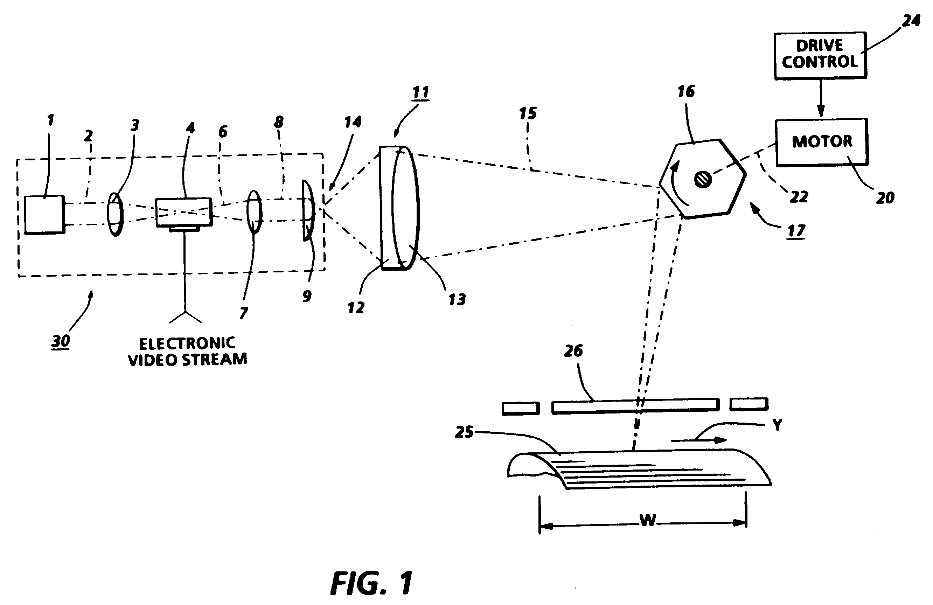

Referring to Figure 1, a light source 1 provides the original light beam for utilization by the printing system. The light source 1 is preferably a laser, such as helium-cadmium or helium-neon laser, which generates a collimated beam of monochromatic light 2. The monochromatic light beam is focused by spherical leans 3 onto modulator 4, the light beam 2 being modulated in conformance with the information contained in a video signal input.

Modulator 4 may be any suitable modulator or modulator/deflector for converting the video information to the form of a modulated light beam 6 at the output of the modulator 4. By means of the modulator 4, typically an acousto-optic modulator, the information within the video signal is represented by the modulated light beam 6.

The light beam 6 is incident on spherical lens element 7 which collimates the incident beam 6. The collimated light output beam 8 from lens 7 is then directed to cylindrical lens 9 which spreads the beam energy in the scan (or tangential) direction and directs the beam to imaging lens 11. Imaging lens 11 produces a beam 15 which impinges upon and illuminates a plurality of contiguous facets 16 of the scanning polygon 17 as shown.

The rotational axis of polygon 17 is orthogonal to the plane in which light beam 6 travels. The facets 16 of the polygon 17 are mirrored surfaces for the reflection of any illuminating light impinging upon them. With the rotation of the polygon 17, light beams are reflected from the illuminated facets and turned through a scan angle to enable flying spot scanning.

Polygon 17 is continuously driven by an AC hysteresis synchronous motor 20 via a drive shaft 22. A drive control system 24, described in further detail below, is provided to control the operation of motor 20.

Medium 25 may be a xerographic drum (a portion of the surface is illustrated) which rotates consecutively through a charging station (not shown) comprising a corona discharge device, an exposure station where the beam from the rotating polygon 17, passing through a cylindrical lens 26 would traverse a scan width W on the drum in the direction of arrow Y, (the fast scan direction), a developing station, and a transfer station (not shown) where copy paper is passed in contact with the drum and receives an electrostatic discharge to induce a transfer of the developed image from the drum to the copy paper.

Usable images are provided in that the information content of the scanning spot is represented by the modulated or variant intensity of light respective to its position within the scan width W. As the spot traverses a charged surface, the spot dissipates the electrostatic charge in accordance with its light intensity. The electrostatic charge pattern thus produced is developed in the developing station and then transferred to the final copy paper. The resolution of the image formed by the scanned light pattern in the slow scan direction (direction of rotation of drum 25) as will be shown below, is a function of the operating speed of the motor.

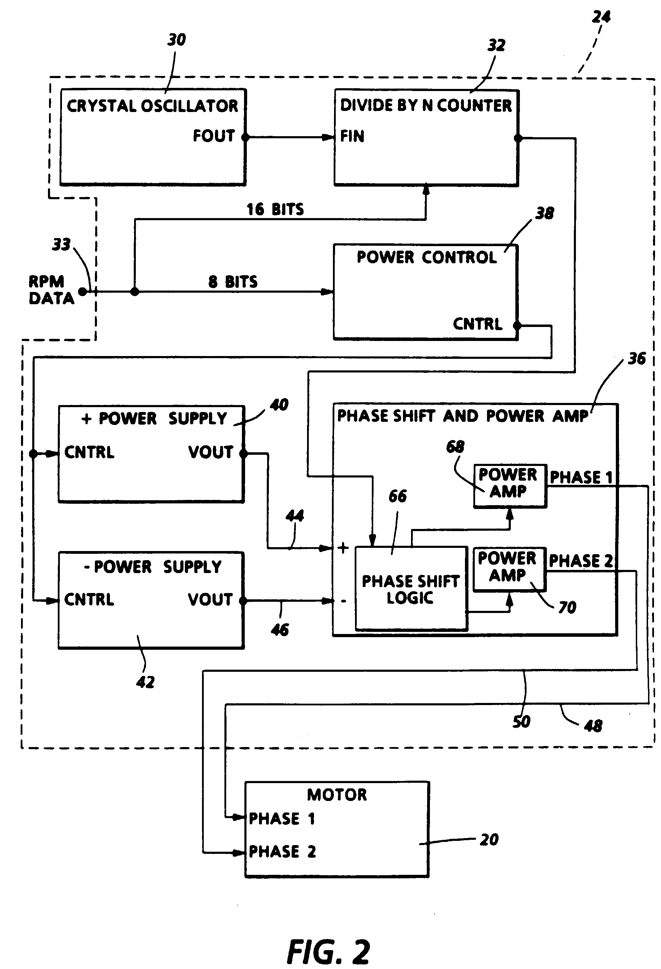

Referring now to Figure 2, a block diagram of drive control system 24 is shown. Crystal oscillator 30 provides a stable reference square wave output. Oscillator 30, in a preferred embodiment, operates at a frequency of 14 mhz which is much higher than the desired motor operating frequency. The oscillator output is divided down by divide by n counter 32. Counter 32 is preset along input lead 33 to a count representing the frequency required to produce a desired slow scan resolution.

Counter 32 in a preferred embodiment provides 16 bits (64K levels) of addressability. The output of counter 32, set at 8X the final motor frequency, is sent to a phase shift and power amplification circuit 36. The input on lead 33 (the 8 most significant bits) is also sent to power control circuit 38 which provides 8 bits (256 levels) of addressability for adjustment of the drive power to the motor. The analog output from power control circuit 38 programs a positive power supply 40 and a negative power supply 42 which supply positive and negative power signals to phase shift and power amp circuit 36 along leads 44, 46 respectively. Circuit 36, utilizing phase shift logic circuit 66 and power amplifiers 68 and 70, produces amplified square wave outputs along leads 48, 50 which are 90° out of phase and at power levels determined by supplies 40, 44 and at a divided down frequency The rotational frequency of motor 20 is given by RPS = f where RPS is the rotational frequency in revolutions per second, and f is the frequency of the motor drive signals in hertz as applied to the motor.

From the above description, and according to a first aspect of the present invention, motor speed, and hence slow scan resolution can be adjusted by changing the counter 32 address at lead 33. The data signal on input lead 33 is also sent to power control circuit 38 to adjust to adjust the drive power level that supplies 40, 42. Thus, as the amplified drive signals are coupled into motor 20 windings at a given changed frequency, the power levels will be adjusted as well so as to prevent the motor from jumping out of sync at the wave front transition points.

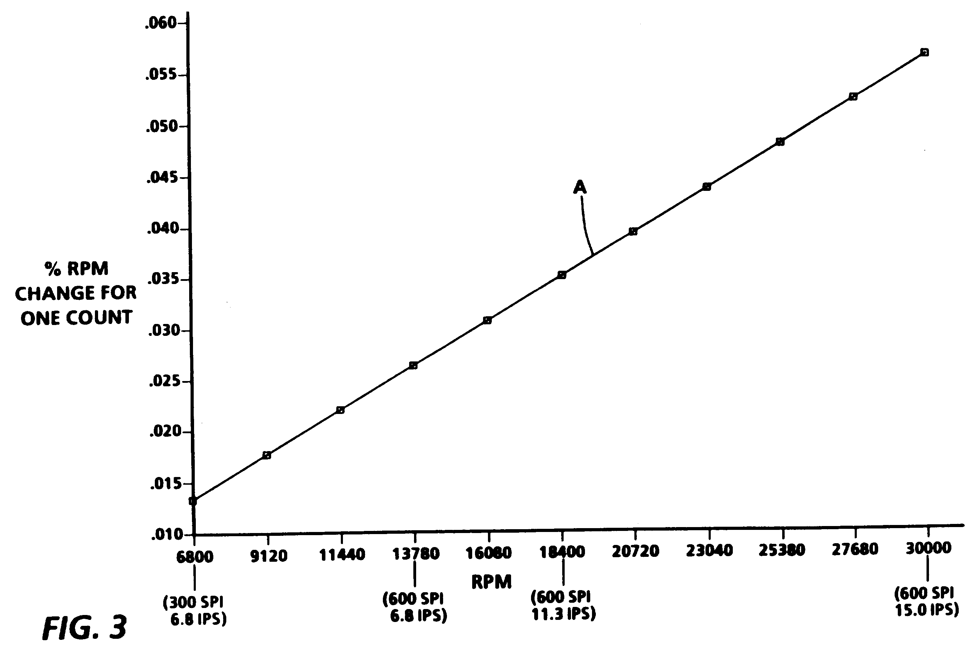

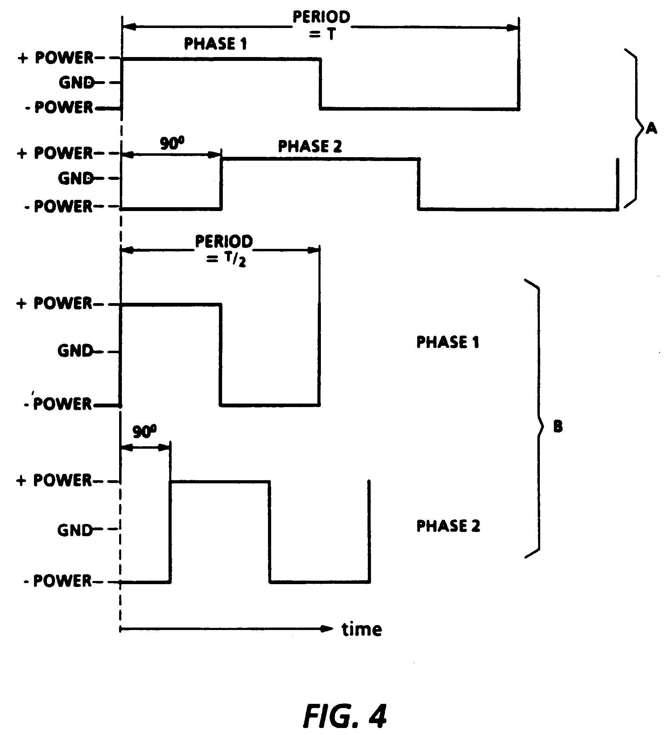

The graph shown in Figure 3 demonstrates the changes in motor speed which result in a change of one count to the input to counter 32. The motor speed in RPM forms the abscissa, while the ordinate is the percent RPM change for each one count input change to the divide-by n counter. The change is linear for different motor speeds and resolutions as shown by the linear plot A. As an example, for a system where polygon 20 is driven at 6800 RPM, and drum 25 has a process speed of 6.8 inches (173 mm) per second, and the image is scanned at a resolution of 300 spi (about 12 spots per mm), a decrease of one count in counter 32 input will increase motor 20 speed by approximately 0.0125 percent. If the resolution is to double to 600 spi (about 24 spots per mm) at the same process speed, the motor speed is doubled to 13600 RPM at which speed each count change to counter 32 causes a 0.025 percent increase in motor speed with a corresponding increase in power level of the square wave input signals. Figure 4 shows the drive signals to the motors: set A represents signals at 6800 RPM, and set B at 13,600 RPM. As seen, as the RPM increases the drive frequency and drive power (amplitude) also increase. Depending upon a process speed, different points along plot A will be at different resolutions and will have different values of percent RPM change. Two such values are shown at 18,400 RPM, and 30,000 RPM. Both of these are at 600 spi (about 24 spots per mm) resolution. It is of course understood that the crystal oscillator 30 upper frequency may have to be increased if the system is to operate at the higher process/resolution ranges.

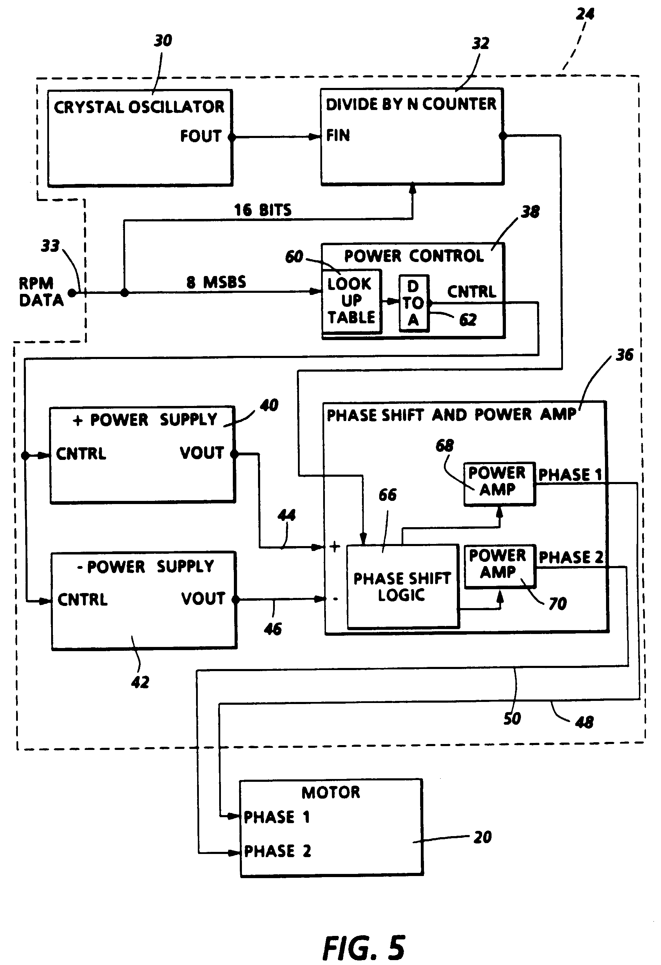

According to a second aspect of the invention, the power adjustment can be provided automatically by incorporating a look-up table in power control circuitry 38. As shown in Figure 5, the 8 most significant bits from the address signal and input line 33 to counter 32 are sent to look-up Table 60. The data for the look-up table is determined either experimentally or mathematically to provide optimum power levels for each motor RPM setting. The relationship between the rotational frequency of the motor (RPS) and the power (P) as applied to the drive signals measured in watts is given by; g(RPS) = P where g is a function of look-up Table 60 that maps the rotational frequency into the proper power level to be applied to the motor drive signals (Phase 1 and 2). Thus, 8 bits out of the look-up Table would be the data input to digital analog (D to A) converter 62. The analog output of converter 62 is used to program the power supplies 40, 42.

While the invention has been described with reference to the structure disclosed, it will be appreciated that numerous changes and modifications are likely to occur to those skilled in the art, and it is intended to cover all changes and modifications which fall within the scope of the invention.

## Claims

1. An open loop motor speed control system for controlling the rotational speed of a polygon (17) adapted to scan a reflected beam (15) of radiation over the surface of a photosensitive medium (25) in the fast scan direction, said system comprising:
an AC hysteresis synchronous motor (20) coupled to said polygon and adapted to drive said polygon at said rotational speed, characterised by
means (30, 32) for varying the frequency of square wave signals applied to said motor in response to signals (33) representing changes in polygon rotation speed and
power control means (36, 38, 40, 42) for adjusting the power level of said square wave signals in response to said square wave signal frequency variations whereby the frequency and amplitude of said square wave signals are varied to provide smooth motor speed transitions at the square wave transition points.

2. The control system of Claim 1 wherein said means (30, 32) for varying the frequency of said square wave signals includes:
square wave generator means (30) for providing a stable square wave output at a first frequency which is higher than the desired final motor frequency and,
counter circuit means (32) for receiving said square wave generator output and dividing down said square wave generator output as a function of the polygon rotational speed input data signals (33).

3. The control system of Claim 2, wherein said power control means are adapted for responding to changes in the output of said counter means and said polygon rotational speed input data signals and include a first positive and a second negative power supply (40, 42), a power control circuit (38) for providing analog output control signals to said first and second power supplies, and phase shift and power amplification circuit means (36) adapted to combine the outputs of said counter circuit means (32) and said positive and negative power supplies (40, 42) to produce two output square signals (48, 50) which are 90° out of phase and at a divided down final motor frequency and having an amplitude which is adjusted to the changes in the motor frequency so as to maintain synchronous motor operations.

4. The control system of Claim 3, wherein said power control circuit (38) includes a look up table (60) having values stored therein which are representative of drive power requirements corresponding to specified changes in said motor frequency.

5. The control system of Claim 4, wherein the relationship between the rotational frequency of the motor (RPS) and the power (P) as applied to the drive signals, measured in watts, is given by the expression g (RPS) = P where g is a function of said look-up table values that maps the rotational frequency into the proper power level to be applied to the motor drive signals and P is the power level, in watts.

## Patentansprüche

1. Motorgeschwindigkeitssteuersystem mit offener Schleife zum Steuern der Drehgeschwindigkeit eines Polygons (17), das dazu geeignet ist, einen reflektierten Strahl (15) einer Strahlung über die Oberfläche eines photoempfindlichen Mediums (25) in der schnellen Abtastrichtung abzutasten, wobei das System aufweist:
einen AC-Hysterese-Synchronmotor (20), der mit dem Polygon gekoppelt ist und dazu geeignet ist, das Polygon unter der Drehgeschwindigkeit anzutreiben, gekennzeichnet durch
Einrichtungen (30, 32) zum Variieren der Frequenz der Rechteckwellensignale, die zu dem Motor in Abhängigkeit von Signalen (33), die Änderungen in der Polygondrehgeschwindigkeit darstellen, angelegt wird, und
Leistungssteuereinrichtungen (36, 38, 40, 42) zum Einstellen des Leistungsniveaus der Rechteckwellensignale in Abhängigkeit der Rechteckwellen-Signalfrequenz-Variation, wobei die Frequenz und die Amplitude der Rechteckwellensignale variiert werden, um gleichmäßige Motorgeschwindigkeitsübergänge an den Rechteckwellenübergangspunkten zu liefern.

2. Steuersystem nach Anspruch 1, wobei die Einrichtungen (30, 32) zum Variieren der Frequenz der Rechteckwellensignale umfassen:
eine Rechteckwellen-Generatoreinrichtung (30) zum Liefern eines stabilen Rechteckwellenausgangs bei einer ersten Frquenz, die höher als die erwünschte Endmotorfrequenz ist, und
eine Zählerschaltkreiseinrichtung (32) zum Aufnehmen des Rechteckwellengeneratorausgangs und zum Herunterdividieren des Rechteckwellengeneratorausgangs als eine Funktion der Polygondrehgeschwindigkeits-Eingangsdatensignale (33).

3. Steuersystem nach Anspruch 2, wobei die Leistungssteuereinrichtungen dazu geeignet sind, um auf Änderungen in dem Ausgang der Zählereinrichtung und der Polygondrehgeschwindigkeits-Eingangsdatensignale anzusprechen, und eine erste positive und eine zweite negative Energieversorgung (40, 42), einen Leistungssteuerschaltkreis (38) zum Lieferen analoger Ausgangssteuersignale zu der ersten und zweiten Energiezuführung, und eine Phasenverschiebe- und Leistungsverstärkungsschaltkreiseinrichtung (36), die dazu geeignet ist, die Ausgänge der Zählerschaltkreiseinrichtung (32) und der positiven und negativen Energiezuführung (40, 42) zu kombinieren, um zwei Ausgangsrechtecksignale (48, 50) zu produzieren, die sich 90° außerhalb der Phase und unter einer heruntergeteilten Endmotorfrequenz befinden und eine Amplitude besitzen, die so auf die Änderungen in der Motorfrequenz eingestellt ist, um so synchrone Motorbetriebsweisen aufrechtzuerhalten, umfassen.

4. Steuersystem nach Anspruch 3, wobei der Leistungssteuerschaltkreis (38) eine Durchsichtstabelle (60) besitzt, die Werte besitzt, die darin gespeichert sind, die für Antriebsleistungserfordernisse entsprechend spezifizierter Änderungen in der Motorfrequenz repräsentativ sind.

5. Steuersystem nach Anspruch 4, wobei die Beziehung zwischen der Drehfrequenz des Motors (RPS) und der Leistung (P), wie sie zu den Steuersignalen zugeführt wird, gemessen in Watt, gegeben ist durch den Ausdruck g (RPS) = P, wobei g eine Funktion der Durchsichtstabellen-Werte ist, die die Drehfrequenz in dem geeigneten Leistungspegel auflistet, der zu den Motorantriebssignalen zugeführt werden soll, und P der Leistungspegel, in Watt, ist.

## Revendications

1. Système de commande de vitesse de moteur en boucle ouverte destiné à commander la vitesse de rotation d'un polygone (17) adapté pour balayer un faisceau de rayonnement réfléchi sur la surface d'un support photosensible (25) dans le sens de balayage rapide, ledit système comprenant :
un moteur synchrone à hystérésis en courant alternatif (20) coupé audit polygone et adapté pour entraîner ledit polygone à ladite vitesse de rotation, caractérisé par
un moyen (30, 32) destiné à varier la fréquence des signaux à ondes carrées appliqués audit moteur en réponse aux signaux (33) représentant les variations de la vitesse de rotation du polygone et
des moyens de commande de puissance (36, 38, 40, 42) destinés à régler le niveau de puissance desdits signaux à ondes carrées en réponse auxdites variations de fréquence des signaux à ondes carrées d'où il résulte que la fréquence et l'amplitude desdits signaux à ondes carrées varient pour procurer des transitions de vitesse régulières du moteur aux points de transitions des ondes carrées.

2. Système de commande selon la revendication 1 dans lequel ledit moyen (30, 32) destiné à faire varier la fréquence desdits signaux à ondes carrées comprend :
un moyen de générateur d'ondes carrées (30) destiné à procurer une sortie à ondes carrées stable à une première fréquence qui est supérieure à la fréquence finale du moteur souhaitée et,
un moyen de circuit de compteur (32) destiné à recevoir ladite sortie du générateur à ondes carrées et à diviser ladite sortie du générateur à ondes carrées en fonction des signaux de données d'entrée de vitesse de rotation du polygone (33).

3. Système de commande selon la revendication 2, dans lequel lesdits moyens de commande d'alimentation sont adaptés pour répondre aux variations de la sortie dudit moyen de compteur et desdits signaux de données d'entrée de vitesse de rotation du polygone, et comprennent une première alimentation positive et une seconde alimentation négative (40, 42), un circuit de commande d'alimentation (38) afin de procurer des signaux de commande de sortie analogiques auxdites première et seconde alimentations, et un moyen de circuit de déphasage et d'amplification de puissance (36) adapté pour combiner les sorties dudit moyen de circuit de compteur (32) et desdites alimentations positive et négative (40, 42) afin de procurer deux signaux carrés en sortie (48, 50) qui sont déphasés de 90° et à une fréquence finale divisée de moteur, et présentant une amplitude qui est réglée d'après les variations de la fréquence du moteur de façon à conserver des fonctionnements synchrones du moteur.

4. Système de commande selon la revendication 3, dans lequel ledit circuit de commande de puissance (38) comprend une table de consultation (60) comportant des valeurs mémorisées dans celle-ci, qui sont représentatives des exigences de puissance d'attaque correspondant aux variations spécifiées de ladite fréquence du moteur.

5. Système de commande selon la revendication 4, dans lequel la relation entre la fréquence de rotation du moteur (RPS) et la puissance (P) telle qu'elle est appliquée aux signaux d'attaque, mesurée en watts, est donnée par l'expression g (RPS) =P, où g est une fonction des valeurs de ladite table de consultation qui fait correspondre la fréquence de rotation à un niveau de puissance approprié à appliquer aux signaux d'attaque du moteur, et P est le niveau de puissance, en watts.
